# EUROPÄISCHE PATENTANMELDUNG

(11) **EP 2 641 932 A1**
(43) Veröffentlichungstag der Anmeldung: **25.09.2013**
(21) Anmeldenummer: 12160534.9
(22) Anmeldetag: 21.03.2012
(51) Int. Cl.: C08K 3/24, C08K 5/09, C08K 5/098

(54) **Thermoplastische Formmassen**

(71) Anmelder: LANXESS Deutschland GmbH, 50569 Köln (DE)
(72) Erfinder: Benighaus, Tobias, 40215 Düsseldorf (DE); Joachimi, Detlev, 47800 Krefeld (DE); Margraf, Günter, 41539 Dormagen (DE); Ruthard, Christian, 41539 Dormagen (DE); Schmidt, Holger, 41541 Dormagen (DE)

(57) **Zusammenfassung**

Die vorliegende Erfindung betrifft thermoplastische Formmassen enthaltend als Stabilisatorsystem gegen thermooxidative Schädigung wenigstens ein Salz aus Metall-Kationen und thermisch aktivierbaren reduzierenden Anionen, wobei die Anionen nicht Formiat-Anionen sind. Des Weiteren betrifft die Erfindung die Verwendung dieses Stabilisatorsystems zur Verbesserung der Stabilität thermoplastischer Formmassen gegen thermooxidative Schädigung und/oder photooxidative Schädigung sowie Verfahren zur Herstellung dieser Formmassen.

## Beschreibung

Die vorliegende Erfindung betrifft thermoplastische Formmassen enthaltend als Stabilisatorsystem gegen thermooxidative Schädigung wenigstens ein Salz aus Metall-Kationen und thermisch aktivierbaren reduzierenden Anionen, wobei die Anionen nicht Formiat-Anionen sind. Des Weiteren betrifft die Erfindung die Verwendung dieses Stabilisatorsystems zur Verbesserung der Stabilität thermoplastischer Formmassen gegen thermooxidative Schädigung und/oder photooxidative Schädigung sowie Verfahren zur Herstellung dieser Formmassen.

Thermoplastische Polymere, beispielsweise Polyamide oder Polyester werden häufig als Werkstoffe für Formteile eingesetzt, die während ihrer Lebensdauer erhöhten Temperaturen über einen längeren Zeitraum ausgesetzt sind. Für eine Vielzahl von Anwendungen ist es dabei erforderlich, dass die Werkstoffe ausreichend stabil gegenüber der dabei auftretenden thermooxidativen Schädigung sind, insbesondere für Anwendungen im Motorraum von Kraftfahrzeugen.

Thermoplastische Formmassen zeigen im Allgemeinen eine Verschlechterung ihrer mechanischen Eigenschaften wenn sie über einen längeren Zeitraum erhöhten Temperaturen ausgesetzt werden. Dieser Effekt basiert primär auf der oxidativen Schädigung des Polymers bei erhöhten Temperaturen (thermooxidative Schädigung). Ein längerer Zeitraum im Sinne der vorliegenden Erfindung bedeutet länger als 100 Stunden, erhöhte Temperaturen im Sinne der vorliegenden Erfindung bedeutet höher als 80 °C.

Die Stabilität thermoplastischer Formmassen gegen thermooxidative Schädigung wird üblicherweise durch den Vergleich mechanischer Eigenschaften, insbesondere der Schlagzähigkeit, der im Zugversuch nach ISO 527 gemessenen Bruchspannung und Bruchdehnung sowie des E-Moduls bei definierter Temperatur über einen definierten Zeitraum beurteilt.

Zahlreiche Systeme zur Stabilisierung von thermoplastischen Polymeren, auch als Thermoplasten bezeichnet, gegen thermooxidative Schädigung und dem daraus resultierenden molekularen Abbau sind bekannt und wurden in der Literatur beschrieben. Eine Zusammenfassung findet sich im "Plastic Additives Handbook" (5th Edition, Herausgeber: Hans Zweifel, Carl Hanser Verlag, München 2001) auf den Seiten 10 bis 19 und 40 bis 92. In technischen Thermoplasten, insbesondere Polyamiden, werden üblicherweise Antioxidantien auf Basis sterisch gehinderter Phenole oder auf Basis aromatischer Amine als organische Stabilisatoren oder Systeme auf Basis von Kupferverbindungen als anorganische Stabilisatoren eingesetzt. Die genannten organischen Stabilisatoren werden im Allgemeinen für Temperaturen bis ca. 120 °C eingesetzt, einige sind auch bei höheren Temperaturen noch wirksam. Eine effektive Stabilisierung bei höheren Temperaturen bis ca. 140 °C wird üblicherweise durch Stabilisatorsysteme auf Basis von Mischungen aus Kupferhalogeniden und Alkalihalogeniden erreicht.

In den letzten Jahren sind die Anforderungen an die Gebrauchstemperaturen, bei denen thermoplastische Polymere wie Polyamide noch ausreichend stabil sind, deutlich gestiegen. In vielen Anwendungen ist eine Langzeitwärmestabilisierung gegen thermooxidativen Abbau bei 160°C oder auch 180 - 200°C gefordert.

DE-4305166 A1 beschreibt eine Verbesserung der kupferbasierten Thermostabilisierungen durch Zugabe von starken Reduktionsmitteln, die zu einer in-situ-Bildung von fein verteiltem elementarem Kupfer führt. DE-4305166 A1 zeigt zudem, dass kolloidales, elementares Kupfer, das nicht in-situ erzeugt wird, eine deutlich geringere Aktivität hinsichtlich einer Thermostabilisierung aufweist.

US-A 4347175 beschreibt ein Verfahren zur Stabilisierung von Polymeren durch Mischen der Polymeren mit multi-valenten Metall-Formiaten und Erhitzen der Mischung auf eine Temperatur oberhalb der Zersetzungstemperatur der multi-valenten Metall-Formiate.

Der thermooxidative Abbau von thermoplastischen Formmassen bei erhöhten Temperaturen über einen längeren Zeitraum lässt sich generell mit Stabilisatorsystemen nicht verhindern sondern nur zeitlich verzögern. Die Anforderungen an thermoplastische Formmassen bzw. an daraus herzustellenden Formteilen in Hochtemperaturanwendungen werden mit den aus dem Stand der Technik bekannten Systemen noch nicht ausreichend erfüllt. So erfahren beispielsweise die Schlagzähigkeit oder die Bruchspannung nach ∼1000h Langzeitlagerung bei 180 - 200°C einen recht deutlichen Abfall auf meistens unter 50 % des Ausgangswertes.

Der vorliegenden Erfindung lag daher die Aufgabe zugrunde, ein Stabilisatorsystem und thermoplastische Formmassen enthaltend ein solches Stabilisatorsystem zur Verfügung zu stellen, wodurch eine weitere deutliche Verbesserung der Stabilisierung gegenüber thermooxidativer Schädigung im Vergleich zu den aus dem Stand der Technik bekannten Systemen ermöglicht wird.

Überraschend wurde nun gefunden, dass mit wenigstens einem Salz aus Metall-Kationen und thermisch aktivierbaren reduzierenden Anionen, wobei die Anionen nicht Formiat-Anionen sind, eine deutliche Verbesserung der Stabilität von Thermoplasten bzw. daraus herzustellender Formkörper gegenüber thermooxidativer Schädigung erreicht werden kann.

Die Lösung der Aufgabe und somit Gegenstand der vorliegenden Erfindung ist die Verwendung wenigstens eines Salzes aus Metall-Kationen und thermisch aktivierbaren reduzierenden Anionen, wobei die Anionen nicht Formiat-Anionen sind, zur Stabilisierung thermoplastischer Polymere bzw. auf thermoplastischen Polymeren basierenden Formmassen und daraus herzustellender Fasern, Folien oder Formteile gegen thermooxidative Schädigung und/oder gegen photooxidative Schädigung.

Zur Klarstellung sei angemerkt, dass vom Rahmen der Erfindung alle nachfolgend aufgeführten, allgemeinen oder in Vorzugsbereichen genannten Definitionen und Parameter in beliebigen Kombinationen umfasst sind.

Gegenstand der vorliegenden Erfindung sind auch thermoplastische Formmassen enthaltend
(1) 10 bis 99,85 Gew.-% eines thermoplastischen Polymers oder einer Kombination unterschiedlicher thermoplastischer Polymere,
(2) 0,05 bis 10 Gew.-% wenigstens eines Salzes aus Metall-Kationen und thermisch aktivierbaren reduzierenden Anionen, wobei die Anionen nicht Formiat-Anionen sind, und
(3) 0,1 bis 70 Gew.-% weitere Zusatzstoffe, wobei die Summe der Gewichtsprozente stets 100 Gew.-% ist.

In einer bevorzugten Ausführungsform enthalten die erfindungsgemäßen thermoplastischen Formmassen zusätzlich zu den Komponenten (1) bis (3) noch (4) 5 ― 70 Gew.-% Füll- oder Verstärkungsstoffe, bevorzugt Glasfasern oder Kohlefasern, besonders bevorzugt Glasfasern, wobei die die Anteile der Komponenten (1) bis (3) so reduziert werden, dass die Summe aller Gewichtsprozente 100 ergibt.

Erfindungsgemäß bevorzugt sind thermoplastische Formmassen enthaltend
(1) 10 bis 99,75 Gew.-% eines thermoplastischen Polymers oder einer Kombination unterschiedlicher thermoplastischer Polymere,
(2) 0,05 bis 8 Gew.-%, bevorzugt 0,1 bis 5 Gew.-%, besonders bevorzugt 0,2 bis 3 Gew.-% wenigstens eines Salzes aus Metall-Kationen und thermisch aktivierbaren reduzierenden Anionen, wobei die Anionen nicht Formiat-Anionen sind, und
(3) 0,1 bis 70 Gew.-% weitere Zusatzstoffe, wobei die Summe der Gewichtsprozente stets 100 Gew.-% ist.

Die vorliegende Erfindung betrifft zudem die Verwendung der erfindungsgemäßen thermoplastischen Formmassen zur Herstellung von Fasern, Folien oder Formkörpern jeglicher Art.

Die vorliegende Erfindung betrifft aber auch ein Verfahren zur Thermostabilisierung thermoplastischer Polymere und daraus herzustellender Fasern, Folien oder Formkörper, indem man ein Stabilisatorsystem enthaltend wenigstens ein Salz aus Metall-Kationen und thermisch aktivierbaren reduzierenden Anionen, wobei die Anionen nicht Formiat-Anionen sind, einsetzt.

Die vorliegende Anmeldung betrifft aber auch ein Verfahren zur Verringerung photooxidativer Schädigungen und/oder thermooxidativer Schädigungen thermoplastischer Polymere, bzw. an daraus herzustellenden Folien, Fasern oder Formteilen, indem man wenigstens ein Salz aus Metall-Kationen und thermisch aktivierbaren reduzierenden Anionen, wobei die Anionen nicht Formiat-Anionen sind, dem thermoplastischen Polymer als Stabilisatorsystem zusetzt.

Die als Komponente (1) einzusetzenden thermoplastischen Polymere sind bevorzugt amorphe Polymere, thermoplastische Elastomere oder semi-kristalline Polymere. Besonders bevorzugt wird das erfindungsgemäße Stabilisatorsystem bei Polymeren angewandt, die bei HochtemperaturAnwendungen zum Einsatz kommen, ganz besonders bevorzugt bei semi-kristallinen Polymeren mit einem Schmelzpunkt von mindestens 180 °C oder amorphen Polymeren mit einer Glasübergangstemperatur von mindestens 150 °C.

Insbesondere bevorzugt als Komponente (1) einzusetzende amorphe Polymere sind amorphe Polyamide, amorphe Polyimide, amorphe Polyetherimide, amorphe Polysulfone oder amorphe Polyarylate.

Insbesondere bevorzugt als Komponente (1) einzusetzende semi-kristalline Polymere sind Polyphenylensulfide, Polyester, Polyetherketone oder semi-kristalline Polyamide.

In einer bevorzugten Ausführungsform wird als Komponente (1) auch ein Blend unterschiedlicher thermoplastischer Polymere eingesetzt.

Insbesondere ganz besonders bevorzugt wird als Komponente (1) aliphatisches oder semiaromatisches Polyamid, insbesondere Polyamid 6 oder Polyamid 66 mit relativen Lösungsviskositäten in m-Kresol von 2,0 bis 4,0, insbesondere ganz besonders bevorzugt Polyamid 6 mit einer relativen Lösungsviskosität in m-Kresol von 2,3 ― 3,2 eingesetzt.

Bei Verfahren zur Bestimmung der relativen Lösungsviskosität werden die Durchlaufzeiten eines gelösten Polymers durch ein Ubbelohde-Viskosimeter gemessen, um anschließend den Viskositätsunterschied zwischen Polymerlösung und seinem Lösungsmittel, hier m-Kresol (1 %ige Lösung), zu bestimmen. Anwendbare Normen: sind DIN 51562; DIN ISO 1628 oder entsprechende Normen.

Die in einer bevorzugten Ausführungsform einzusetzenden Blends enthalten als Komponente (1) bevorzugt Polyamid 6, Polyamid 66, Polyamid 46, Polyamid 12 oder Copolyamide. In einer alternativ bevorzugten Ausführungsform enthalten die Blends wenigstens eines der genannten Polyamide und wenigstens ein weiteres thermoplastisches Polymer der Reihe Polyphenylenoxid, Polyethylen oder Polypropylen.

Die in den erfindungsgemäßen thermoplastischen Formmassen bevorzugt einzusetzenden Polyamide können nach verschiedenen Verfahren hergestellt werden und aus unterschiedlichen Bausteinen synthetisiert werden. Zur Herstellung von Polyamiden sind eine Vielzahl von Verfahrensweisen bekannt, wobei je nach gewünschtem Endprodukt unterschiedliche Monomerbausteine, verschiedene Kettenregler zur Einstellung eines angestrebten Molekulargewichtes oder auch Monomere mit reaktiven Gruppen für später beabsichtigte Nachbehandlungen eingesetzt werden.

Die technisch relevanten Verfahren zur Herstellung der erfindungsgemäß bevorzugten Polyamide verlaufen meist über die Polykondensation in der Schmelze. Im Rahmen der vorliegenden Erfindung wird auch die hydrolytische Polymerisation von Lactamen als Polykondensation verstanden.

Erfindungsgemäß bevorzugte Polyamide sind teilkristalline Polyamide, die ausgehend von Diaminen und Dicarbonsäuren und/oder Lactamen mit wenigstens 5 Ringgliedern oder entsprechenden Aminosäuren hergestellt werden. Als Edukte kommen bevorzugt aliphatische und/oder aromatische Dicarbonsäuren, besonders bevorzugt Adipinsäure, 2,2,4-Trimethyladipinsäure, 2,4,4-Trimethyladipinsäure, Azelainsäure, Sebazinsäure, Isophthalsäure, Terephthalsäure, aliphatische und/oder aromatische Diamine, besonders bevorzugt Tetramethylendiamin, Hexamethylendiamin, 2-Methylpentan-1,5-diamin, 1,9-Nonandiamin, 2,2,4- und 2,4,4-Trimethylhexamethylendiamin, die Isomeren Diamino-dicyclohexylmethan, Diaminodicyclohexylpropan, Bis-aminomethyl-cyclohexan, Phenylendiamin, Xylylendiamin, Aminocarbonsäuren, insbesondere Aminocapronsäure, oder die entsprechenden Lactame in Betracht. Copolyamide aus mehreren der genannten Monomeren sind eingeschlossen.

Erfindungsgemäß besonders bevorzugte Polyamide werden aus Caprolactam, ganz besonders bevorzugt aus ε-Caprolactam hergestellt.

Insbesondere besonders bevorzugt sind weiterhin die meisten auf PA6, PA66 und andere auf aliphatischen oder/und aromatischen Polyamiden bzw. Copolyamiden basierenden Compounds, bei denen auf eine Polyamidgruppe in der Polymerkette 3 bis 11 Methylengruppen kommen.

Als Komponente (2) werden Salze von Metall-Kationen mit thermisch aktivierbaren reduzierenden Anionen eingesetzt, mit Ausnahme von Formiat-Anionen. Erfindungsgemäß bevorzugt sind Salze mit Metall-Kationen der Übergangsmetalle der Gruppen 8 bis 10 des Periodensystems. Besonders bevorzugt werden Salze mit Kupfer- oder Eisen-Kationen eingesetzt. Ganz besonders bevorzugt werden Eisen-Kationen verwendet.

Als thermisch aktivierbare reduzierende Anionen werden im Sinne der Erfindung solche Anionen betrachtet, die bei Temperaturen zwischen 100 und 450 °C, bevorzugt 150 bis 400 °C, besonders bevorzugt 200 bis 400 °C, Reaktionen mit einem Normalpotential bei 25 °C relativ zur Standardwasserstoffelektrode von weniger als 0 V, bevorzugt weniger als -0,15 V, besonders bevorzugt weniger als -0,3 V, mit ausreichender Reaktionsgeschwindigkeit eingehen. Als ausreichende Reaktionsgeschwindigkeiten werden im Sinne dieser Erfindung Reaktionsgeschwindigkeiten betrachtet, die über einen Zeitraum von einer Stunde zu einer Umsetzung von mindestens 10 Mol-%, bevorzugt mindestens 25 Mol-%, besonders bevorzugt mindestens 50 Mol-% des eingesetzten Stoffes, hier des thermisch aktivierbaren reduzierenden Anions, führen.

Erfindungsgemäß bevorzugt werden Salze mit Anionen von Dicarbonsäuren mit weniger als sechs, bevorzugt weniger als vier, Kohlenstoffatomen, oder Salze mit Anionen von Sauerstoffsäuren des Phosphors mit Phosphoratomen in einer formalen Oxidationsstufe niedriger als 5, bevorzugt niedriger als 3, oder Salze mit Anionen von Sauerstoffsäuren des Schwefels mit Schwefelatomen in einer Oxidationsstufe niedriger als 6, bevorzugt niedriger als 4, sowie Hydride der Elemente der Gruppe 3 des Periodensystems eingesetzt.

Besonders bevorzugt werden Salze mit Anionen der Reihe Oxalat, Phosphinat, Phosphonat, Dithionat, Sulfit, Dithionit, Thiosulfat oder Borhydrid eingesetzt. Ganz besonders bevorzugt werden Salze mit Phosphinat- oder Oxalat-Anionen verwendet.

Ganz besonders bevorzugt wird als Komponente (2) Eisenoxalat eingesetzt, insbesondere ganz besonders bevorzugt Eisen(II)oxalat-Dihydrat.

Bevorzugt wird die erfindungsgemäß einzusetzende Komponente (2) als Pulver, Paste oder Kompaktat eingesetzt. Bevorzugte Pulver der Komponente (2) weisen eine mittlere Partikelgröße d₅₀ von maximal 1000 µm, bevorzugt 0,1 bis 500 µm, besonders bevorzugt 0,5 bis 250 µm auf (gemäß ASTM D 1921-89, Methode A) wodurch die feine Verteilung im Thermoplasten gewährleistet wird. Wird die Komponente (2) als Paste oder Kompaktat eingesetzt, so können die üblicherweise für die Herstellung von Pasten oder Kompaktaten eingesetzten Bindemittel, bevorzugt Wachse, Öle, Polyglykole oder ähnliche Verbindungen gegebenenfalls auch in Kombinationen in geeigneten Mengenanteilen eingesetzt werden.

Als weitere Zusatzstoffe der Komponente (3) wird bevorzugt wenigstens ein Stoff der Reihe Thermostabilisatoren, die nicht unter die Definition des erfindungsgemäß einzusetzenden Stabilisatorsystems der Komponente (2) fallen, UV-Stabilisatoren, Gammastrahlenstabilisatoren, Hydrolysestabilisatoren, Antistatika, Emulgatoren, Nukleierungsmittel, Weichmacher, Verarbeitungshilfsmittel, Schlagzähmodifikatoren, Gleitmittel, Entformungsmittel, Farbstoffe oder Pigmente eingesetzt. Die genannten und weitere geeignete Additive sind Stand der Technik und können vom Fachmann beispielsweise im Plastics Additives Handbook, 5th Edition, Hanser-Verlag, München, 2001, Seiten 80―84, 546―547, 688, 872―874, 938, 966 aufgefunden werden. Die als Komponente (3) einzusetzenden Zusatzstoffe können alleine oder in Mischung bzw. in Form von Masterbatchen eingesetzt werden.

Erfindungsgemäß bevorzugt als Zusatzstoff einzusetzende zusätzliche Thermostabilisatoren, die nicht unter die oben genannte Definition des erfindungsgemäß einzusetzenden Stabilisatorsystems der Komponente (2) fallen, sind Kupferverbindungen, insbesondere Kupferhalogenide in Kombination mit Alkalimetallhalogeniden, Alkalimetall- und Erdalkalimetallhalogenide, bevorzugt Natriumchlorid oder Calciumchlorid, Manganchlorid, sterisch gehinderte Phenole und/oder Phosphite, Phosphate, bevorzugt Dinatriumdihydrogendiphosphat, Hydrochinone, aromatische sekundäre Amine, insbesondere Diphenylamine, substituierte Resorcine, Salicylate, Benzotriazole oder Benzophenone, sowie verschieden substituierte Vertreter dieser Gruppen und/oder deren Mischungen. Besonders bevorzugt wird als Thermostabilisator Kaliumbromid und/oder Kupfer(I)jodid eingesetzt, ganz besonders bevorzugt Kaliumbromid und Kupfer(I)jodid.

Erfindungsgemäß bevorzugt als Zusatzstoff einzusetzende UV-Stabilisatoren sind substituierte Resorcine, Salicylate, Benzotriazole oder Benzophenone.

Im Falle erfindungsgemäß als Komponente (3) bevorzugt einzusetzender Schlagzähmodifikatoren oder Elastomer-modifikatoren handelt es sich ganz allgemein um Copolymerisate, die bevorzugt aus mindestens zwei der folgenden Reihe an Monomeren aufgebaut sind: Ethylen, Propylen, Butadien, Isobuten, Isopren, Chloropren, Vinylacetat, Styrol, Acrylnitril und Acrylsäureester oder Methacrylsäureester mit 1 bis 18 C-Atomen in der Alkoholkomponente. Die Copolymerisate können kompatibilisierende Gruppen, bevorzugt Maleinsäureanhydrid oder Epoxid enthalten.

Erfindungsgemäß als Zusatzstoff bevorzugt einzusetzende Farbstoffe oder Pigmente sind anorganische Pigmente, besonders bevorzugt Titandioxid, Ultramarinblau, Eisenoxid, Zinksulfid oder Russ, sowie organische Pigmente, besonders bevorzugt Phthalocyanine, Chinacridone, Perylene sowie Farbstoffe, besonders bevorzugt Nigrosin oder Anthrachinone als Farbmittel sowie andere Farbmittel.

Erfindungsgemäß als Zusatzstoff bevorzugt einzusetzende Nukleierungsmittel sind Natrium- oder Calciumphenylphosphinat, Aluminiumoxid oder Siliziumdioxid oder Talkum, besonders bevorzugt Talkum.

Erfindungsgemäß als Zusatzstoff bevorzugt einzusetzende Gleit- und/oder Entformungsmittel sind langkettige Fettsäuren, insbesondere Stearinsäure, deren Salze, insbesondere Ca- oder Zn-Stearat sowie deren Esterderivate oder Amidderivate, insbesondere Ethylen-bis-stearylamid, Glyzerintristearat, Stearylstearat, Montanwachse, insbesondere Ester von Montansäuren mit Ethylenglycol sowie niedermolekulare Polyethylen- bzw. Polypropylenwachse in oxidierter und nicht-oxidierter Form. Erfindungsgemäß besonders bevorzugte Gleit- und/oder Entformungsmittel sind in der Gruppe der Ester oder Amide gesättigter oder ungesättigter aliphatischer Carbonsäuren mit 8 bis 40 C-Atomen mit aliphatischen gesättigten Alkoholen oder Aminen mit 2 bis 40 C-Atomen enthalten. In einer weiteren bevorzugten Ausführungsform enthalten die erfindungsgemäßen Formmassen Mischungen der oben genannten Gleit- und/oder Entformungsmittel.

Füll- und Verstärkungsstoffe als Komponente (4) im Sinne der vorliegenden Erfindung sind faserförmige, nadelförmige oder teilchenförmige Füll- und Verstärkungsstoffe. Bevorzugt sind Kohlenstofffasem, Glaskugeln, amorphe Kieselsäure, Calciumsilicat, Calciummetasilicat, Magnesiumcarbonat, Kaolin, calciniertes Kaolin, Kreide, gepulverter Quarz, Glimmer, Phlogopit, Bariumsulfat, Feldspat, Wollastonit, Montmorillonit oder Glasfasern, besonders bevorzugt Glasfasern, insbesondere bevorzugt Glasfasern aus E-Glas. Die faserförmigen oder teilchenförmigen Verstärkungsstoffe sind in einer bevorzugten Ausführungsform zur besseren Verträglichkeit mit Thermoplasten mit geeigneten Oberflächenmodifizierungen, insbesondere Oberflächenmodifizierungen enthaltend Silanverbindungen versehen.

Ferner ist Gegenstand der vorliegenden Erfindung ein Verfahren zur Herstellung der erfindungsgemäßen thermoplastischen Formmassen dadurch gekennzeichnet, dass man die Komponenten (1) bis (3) sowie gegebenenfalls noch (4) in entsprechenden Gewichtsanteilen mischt. Vorzugsweise geschieht das Mischen der Komponenten bei Temperaturen von 220 bis 400°C durch gemeinsames Vermengen, Vermischen, Kneten, Compoundieren, Extrudieren oder Verwalzen der Komponenten, besonders bevorzugt durch Compoundieren auf einem gleichläufigen Zweiwellenextruder oder Buss-Kneter. Es kann vorteilhaft sein, einzelne Komponenten vorzumischen.

In einer bevorzugten Ausführungsform werden die erfindungsgemäßen Formmassen in einem zweistufigen Prozess hergestellt. Im ersten Schritt wird die Komponente (2) mit einem thermoplastischen Polymer zu einer Vormischung vermischt und auf eine Temperatur erhitzt, die oberhalb der Umsetzungstemperatur der Komponente (2) liegt. Es können auch andere Komponenten der erfindungsgemäßen thermoplastischen Formmasse in diesem Schritt mit der Komponente (2) und einem thermoplastischen Polymer vermischt werden. Bevorzugt wird dieser Schritt in einem gleichläufigen Zweiwellenextruder, Buss-Kneter oder Planetwalzenextruder durchgeführt. Bevorzugt wird in diesem ersten Schritt die Komponente (2) in einem Polyamid, bevorzugt PA6 oder PA66, mit einer relativen Lösungsviskosität in m-Kresol von 2,8 bis 5,0, bevorzugt von 3,5 bis 4,5 umgesetzt.

Bevorzugt wird in diesem ersten Schritt die Vormischung aus thermoplastischem Polymer und Komponente (2) sowie gegebenenfalls weiterer Komponenten auf eine Temperatur von 300 bis 400 °C, besonders bevorzugt 320 bis 390 °C, ganz besonders bevorzugt 330 bis 380 °C erhitzt.

Die Vormischung enthält im ersten Schritt in einer bevorzugten Ausführungsform neben dem Thermoplasten und der Komponente (2) zusätzlich mindestens einen Verarbeitungsstabilisator. Als Verarbeitungsstabilisator werden bevorzugt sterisch gehinderte Phenole und/oder Phosphite, Phosphate, Hydrochinone, aromatische sekundäre Amine, insbesondere Diphenylamine, substituierte Resorcine, Salicylate, Benzotriazole oder Benzophenone, sowie verschieden substituierte Vertreter dieser Gruppen und/oder deren Mischungen eingesetzt.

Im ersten Schritt liegt der Anteil der Komponente (2) an der Vormischung bevorzugt bei 1 bis 60 Gew.-%, besonders bevorzugt bei 1 bis 30 Gew.-%, ganz besonders bevorzugt bei 2 bis 20 Gew.-%.

Die Vormischung wird bevorzugt in einem Zweiwellenextruder, Buss-Kneter oder Planetwalzenextruder umgesetzt, der mit einer Entgasungsfunktion ausgestattet ist, um die bei der Unsetzung der Komponente (2) entstehenden gasförmigen Komponenten abzuführen.

Alternativ kann die Komponente (2) in einem geeigneten Stoff der Komponenten (3) in einem Zweiwellenextruder, Busskneter oder anderen Apparat umgesetzt werden, der dazu geeignet ist, die Mischung auf Temperaturen oberhalb der Umsetzungstemperatur der Komponente (2) zu erhitzen. Auch ein diskontinuierliches Verfahren, bevorzugt in einem Rührautoklaven, ist im ersten Schritt anwendbar.

In einer alternativen bevorzugten Ausführungsform wird die Komponente (2) in Kombination mit einer oder mehreren Verbindungen eingesetzt, die die Umsetzungsgeschwindigkeit der Komponente (2) erhöhen. Dies hat zur Folge, dass die Umsetzung der Komponente (2) bei niedrigeren Temperaturen möglich ist. Derartige Verbindungen, auch als Aktivatoren bezeichnet, sind beispielsweise in US-A 4438223 beschrieben, deren Inhalt von der vorliegenden Erfindung vollumfänglich mit umfasst wird. Bevorzugt wird als Aktivator wenigstens eine Verbindung der Reihe Natrium- oder Kaliumhydrogencarbonat, Natrium- oder Kaliumacetat, Natrium- oder Kaliumcarbonat, Natrium- oder Kaliumchlorid, Natrium- oder Kaliumbromid, Natrium- oder Kaliumiodid, Natrium- oder Kaliumrhodanid oder Natrium- oder Kaliumbenzoat eingesetzt.

Im zweiten Schritt wird die Vormischung aus dem ersten Schritt mit den restlichen Komponenten der erfindungsgemäßen thermoplastischen Formmasse nach den oben beschriebenen Verfahren vermischt.

Die erfindungsgemäß herzustellenden thermoplastischen Formmassen können nach Verfahren, die dem Fachmann bekannt sind, insbesondere durch Spritzgießen, Extrudieren oder Blasformen verarbeitet werden.

Es kann vorteilhaft sein, Formteile oder Halbzeuge aus einer bei Raumtemperatur, bevorzugt 0 bis 40°C, hergestellten physikalischen Mischung, einem sogenannten Dryblend, vorgemischter Komponenten und/oder einzelner Komponenten direkt herzustellen.

Die erfindungsgemäß aus den Formmassen herzustellenden Formteile können bevorzugt in der Kraftfahrzeug-, Elektro-, Elektronik-, Telekommunikations-, Solar- Informationstechnologie-, Computer-Industrie, im Haushalt, Sport, in der Medizin oder in der Unterhaltungsindustrie angewandt werden. Insbesondere können erfindungsgemäße Formmassen für Anwendungen eingesetzt werden, für die eine hohe Stabilität gegen Wärmealterung erforderlich ist. Bevorzugt für derartige Anwendungen ist die Verwendung für Formteile in Fahrzeugen, insbesondere in Kraftfahrzeugen (KFZ), insbesondere im KFZ-Motorraum. Die vorliegende Erfindung betrifft deshalb auch die Verwendung von thermoplastischen Formmassen enthaltend das erfindungsgemäß einzusetzende Stabilisatorsystem zur Herstellung von Formteilen und Artikeln mit erhöhter Stabilität gegen thermooxidative Schädigung und/oder photooxidativer Schädigung, bevorzugt von Formteilen für Kraftfahrzeuge (KFZ), insbesondere bevorzugt für den Motorraum von KFZs. Die erfindungsgemäßen thermoplastischen Formmassen sind außerdem auch für Anwendungen bzw. Formteile oder Artikel geeignet, wo zusätzlich zur thermooxidativen Stabilität eine Stabilität gegenüber photooxidativer Schädigung erforderlich ist, bevorzugt Solaranlagen.

Die Erfindung betrifft ferner die Verwendung der erfindungsgemäß herzustellenden Fasern, Folien oder Formkörper zur Herstellung von Artikeln für die Elektro-, Elektronik-, Telekommunikations-, Informationstechnologie-, Solar-, Computerindustrie, für den Haushalt, für den Sport, für medizinische Anwendungen oder für die Unterhaltungsindustrie, besonders bevorzugt für Kraftfahrzeuge, ganz besonders bevorzugt für den Motorraum von Kraftfahrzeugen.

### Beispiele

Zum Nachweis der Vorteile der erfindungsgemäßen Formmassen wurde zunächst eine Vormischung mit 5 % Eisenoxalat und anschließend die thermoplastischen Formmassen hergestellt. Bei Angaben in [%] handelt es sich stets um Gewichtsprozent.

### Herstellung einer Vormischung mit 5% Eisenoxalat

5 Gew.-% Eisenoxalat wurden mit 95 Gew.-% eines Polyamids PA6 A in einem Zweiwellenextruder des Typs ZSK 26 Compounder der Firma Coperion Werner & Pfleiderer (Stuttgart, Deutschland) bei einer Temperatur von ca. 370 °C gemischt, als Strang in ein Wasserbad ausgetragen, bis zur Granulierfähigkeit abgekühlt und granuliert. Das Granulat wurde zwei Tage bei 70°C im Vakuumtrockenschrank getrocknet.

### Herstellung der thermoplastischen Formmassen

Die einzelnen Komponenten wurden in einem Zweiwellenextruder des Typs ZSK 26 Compounder der Firma Coperion Werner & Pfleiderer (Stuttgart, Deutschland) bei einer Temperatur von ca. 280 °C gemischt, als Strang in ein Wasserbad ausgetragen, bis zur Granulierfähigkeit abgekühlt und granuliert. Das Granulat wurde zwei Tage bei 70°C im Vakuumtrockenschrank getrocknet.

**Tabelle 1: Zusammensetzungen der Formmassen (alle Angabe in Gew.-%).**

| **Inhaltsstoff** | **Vergl.-Bsp. 1** | **Bsp. 1** |
|---|---|---|
| Glasfaser | 30,000 | 30,000 |
| PA6 B | 69,680 | 59,820 |
| Mikrotalkum | 0,020 | 0,020 |
| Montanesterwachs | 0,160 | 0,160 |
| Kaliumbromid | 0,100 | |
| Kupfer(I)iodid | 0,040 | |
| Vormischung 5% Eisenoxalat in PA6 A | | 10,000 |

### Verwendete Materialien:

PA6 A: Polyamid 6, linear mit einer relativen Lösungsviskosität einer 1%igen Lösung in m-Kresol von 4,0
PA6 B: Polyamid 6, linear mit einer relativen Lösungsviskosität einer 1%igen Lösung in m-Kresol von 2,9
Montanesterwachs, z.B. Licowax^{®} E von Clariant GmbH
Glasfasern, z.B. CS7928 von Lanxess Deutschland GmbH
Kaliumbromid, d₉₉ < 70 µm
Kupfer(I)-Iodid, d₉₉ < 70 µm
Eisenoxalat, beispielsweise Eisen(II)-oxalat Dihydrat von VWR International GmbH

## Patentansprüche

1. Thermoplastische Formmassen enthaltend
(1) 10 bis 99,85 Gew.-% eines thermoplastischen Polymers oder eine Kombination unterschiedlicher thermoplastischer Polymere,
(2) 0,05 bis 10 Gew.-% wenigstens eines Salzes aus Metall-Kationen und thermisch aktivierbaren reduzierenden Anionen, wobei die Anionen nicht Formiat-Anionen sind, und
(3) 0,1 bis 70 Gew.-% weiterer Inhaltsstoffe, wobei die Summe aller Gewichtsprozente stets 100 Gew.-% ergibt,
mit der Maßgabe, dass als thermisch aktivierbare reduzierende Anionen solche Anionen betrachtet werden, die bei Temperaturen zwischen 100 und 450 °C Reaktionen mit einem Normalpotential bei 25 °C relativ zur Standardwasserstoffelektrode von weniger als 0 V mit ausreichender Reaktions-geschwindigkeit eingehen, wobei ausreichende Reaktionsgeschwindigkeiten eine Umsetzung des thermisch aktivierbaren Anions von mindestens 10 Mol-% über einen Zeitraum von einer Stunde bedeutet.

2. Thermoplastische Formmassen gemäß Anspruch 1, **dadurch gekennzeichnet, dass** als Komponente (2) Salze mit dem Metall-Kation Eisen eingesetzt werden.

3. Thermoplastische Formmassen gemäß einem der Ansprüche 1 oder 2, **dadurch gekennzeichnet, dass** als Komponente (2) Salze mit Anionen der Reihe, Oxalat, Phosphinat, Phosphonat, Dithionat, Sulfit, Dithionit, Thiosulfat oder Borhydrid eingesetzt werden, bevorzugt Salze mit Phosphinat- oder Oxalat-Anionen, besonders bevorzugt Salze mit Oxalat-Anionen.

4. Thermoplastische Formmassen gemäß einem der Ansprüche 1 bis 3, **dadurch gekennzeichnet, dass** als Komponente (2) wenigstens ein Salz der Reihe Eisenoxalat oder Eisenphosphinat eingesetzt wird, bevorzugt Eisenoxalat.

5. Thermoplastische Formmassen gemäß einem der Ansprüche 1 bis 4, **dadurch gekennzeichnet, dass** diese als Komponente (1) aliphatische oder semi-aromatische Polyamide, bevorzugt Polyamide hergestellt aus einem oder mehreren der Monomere ε-Caprolactam, Adipinsäure, Terephthalsäure, Hexamethylendiamin, Tetramethylendiamin, oder 2-Methylpentan-1,5-diamin, besonders bevorzugt PA6, PA66 oder ein Co-Polyamid von PA6 oder PA66 enthalten.

6. Thermoplastische Formmassen gemäß einem der Ansprüche 1 bis 5, **dadurch gekennzeichnet, dass** als Komponente (3) wenigstens ein Zusatzstoff der Reihe Thermostabilisatoren, die nicht unter die Definition der Komponente (2) fallen, UV-Stabilisatoren, Gammastrahlenstabilisatoren, Hydrolysestabilisatoren, Antistatika, Emulgatoren, Nukleierungsmittel, Weichmacher, Verarbeitungshilfsmittel, Schlagzähmodifikatoren, Gleitmittel, Entformungsmittel, Farbstoffe oder Pigmente.

7. Verwendung wenigstens eines Salzes aus Metall-Kationen und thermisch aktivierbaren reduzierenden Anionen, wobei die Anionen nicht Formiat-Anionen sind, zur Stabilisierung thermoplastischer Polymere sowie daraus herzustellender Fasern, Folien oder Formteile gegen thermooxidative und/oder photooxidative Schädigung mit der Maßgabe, dass als thermisch aktivierbare reduzierende Anionen solche Anionen betrachtet werden, die bei Temperaturen zwischen 100 und 450 °C Reaktionen mit einem Normalpotential bei 25 °C relativ zur Standardwasserstoffelektrode von weniger als 0 V mit ausreichender Reaktionsgeschwindigkeit eingehen, wobei ausreichende Reaktionsgeschwindigkeiten eine Umsetzung des thermisch aktivierbaren Anions von mindestens 10 Mol-% über einen Zeitraum von einer Stunde bedeutet.

8. Verwendung gemäß Anspruch 7, **dadurch gekennzeichnet, dass** als Salz Eisenoxalat und/oder Eisenphosphinat eingesetzt wird, bevorzugt Eisenoxalat.

9. Verwendung gemäß der Ansprüche 7 oder 8, **dadurch gekennzeichnet, dass** es sich bei den Folien, Fasern oder Formteilen um Artikel für die Elektro-, Elektronik-, Telekommunikations-, Informationstechnologie-, Solar-, Computerindustrie, für den Haushalt, für den Sport, für medizinische Anwendungen oder für die Unterhaltungsindustrie, besonders bevorzugt für Kraftfahrzeuge, ganz besonders bevorzugt für den Motorraum von Kraftfahrzeugen handelt.

10. Fasern, Folien oder Formkörper **dadurch gekennzeichnet, dass** man diese durch Spritzgießen, Extrudieren oder Blasformen der thermoplastischen Formmassen gemäß der Ansprüche 1 bis 6 erhält.

11. Verfahren zur Herstellung thermoplastischer Formmassen nach einem der Ansprüche 1 bis 6 **dadurch gekennzeichnet, dass** die Komponenten (1) bis (3) in entsprechenden Gewichtsanteilen gemischt werden, bevorzugt bei einer Temperatur von 220 bis 400 °C, besonders bevorzugt durch Vermengen, Vermischen, Kneten, Compoundieren, Extrudieren oder Verwalzen.

12. Verfahren nach Anspruch 11, **dadurch gekennzeichnet, dass** in einem ersten Schritt die Komponente (2) mit einem thermoplastischen Polymer vorgemischt, die Vormischung auf eine Temperatur oberhalb der Umsetzungstemperatur der Komponente (2) erhitzt und anschließend die Vormischung mit den weiteren Komponenten der thermoplastischen Formmasse gemischt wird.

13. Verfahren zur Verringerung photooxidativer Schädigungen und/oder thermooxidativer Schädigungen thermoplastischer Polymere, bzw. an daraus herzustellenden Folien, Fasern oder Formteilen, **dadurch gekennzeichnet, dass** man wenigstens ein Salz aus Metall-Kationen und thermisch aktivierbaren reduzierenden Anionen, wobei die Anionen nicht Formiat-Anionen sind, dem thermoplastischen Polymer zusetzt mit der Maßgabe, dass als thermisch aktivierbare reduzierende Anionen solche Anionen betrachtet werden, die bei Temperaturen zwischen 100 und 450 °C Reaktionen mit einem Normalpotential bei 25 °C relativ zur Standardwasserstoffelektrode von weniger als 0 V mit ausreichender Reaktionsgeschwindigkeit eingehen, wobei ausreichende Reaktionsgeschwindigkeiten eine Umsetzung des thermisch aktivierbaren Anions von mindestens 10 Mol-% über einen Zeitraum von einer Stunde bedeutet.
